# EUROPÄISCHE PATENTSCHRIFT

(11) **EP 2 199 321 B1**
(45) Veröffentlichungstag und Bekanntmachung des Hinweises auf die Patenterteilung: **23.11.2016**
(21) Anmeldenummer: 09015360.2
(22) Anmeldetag: 11.12.2009
(51) Int. Cl.: C08J 7/04

(54) **Verfahren zur Beschichtung von polymeren Kunststoffsubstraten**
Method for coating polymeric plastic substrates
Procédé de revêtement de substrats en plastique polymères

(30) Priorität: 19.12.2008 DE 102008063845
(43) Veröffentlichungstag der Anmeldung: 23.06.2010
(73) Patentinhaber: KRD Coatings GmbH, 21502 Geesthacht (DE)
(72) Erfinder: Dahms, Lars, Ingemar, Dr., 10559 Berlin (DE)
(74) Vertreter: Emmel, Thomas

(56) Entgegenhaltungen:
- EP-A2- 0 709 442

## Beschreibung

Die Erfindung bezieht sich auf ein Verfahren zur Beschichtung von polymeren Kunststoffsubstraten, ein Verfahren zur Herstellung entsprechend beschichteter geformter Kunststoffprodukte sowie mit dem Verfahren hergestellte geformte Kunststoffprodukte.

Die Erfindung kann z. B. insbesondere Anwendung finden bei der Herstellung von thermisch geformten Kunststoff-Kfz-Scheiben, deren Randbereich mit einem Schwarzrand versehen ist. Natürlich ist die Erfindung nicht auf diesen Anwendungszweck beschränkt.

Problematisch bei der Herstellung von beschichteten und thermoverformten Kunststoffprodukten ist, dass die z.B. durch Bedruckung aufgetragene Pigmentschicht im Hinblick auf die anschließend vorgenommene Thermoformung oder Beschichtung Störungen hervorruft. Bei einer Beschichtung mit zu geringem Pigmentanteil kann es dazu kommen, dass nach Verformung der Kunststoffscheibe einige Bereiche der Druckschicht nicht mehr ausreichend pigmentiert sind. Es entsteht dann ein ungleichmäßiger Farbeindruck.

Üblicherweise werden z. B. Kunststoffscheiben mit einem weiteren Funktionsüberzug versehen, der z. B. einen UV-Schutz, eine verbesserte Kratzfestigkeit oder andere gewünschte Eigenschaften herstellen soll. Es hat sich gezeigt, dass der Auftrag eines solchen Funktionsüberzuges auf Schichten, die in ihrem Oberflächenbereich einen relativ hohen Pigmentanteil aufweisen, problematisch ist. Typische Probleme, die auftreten, sind z. B. fehlende Haftung des Überzuges, verminderte Härte oder auch Trübung.

Aus der EP 0 709 442 sind Formkörper mit Anti-Drop-Beschichtungen bekannt. Zu ihrer Herstellung wird zunächst ein Formkörper aus Polycarbonat zusammen mit einer UV-Beschichtung coextrudiert und dann wird auf die UV-Beschichtung eine zweite wasserspreitende Schicht aufgebracht. Eventuelle Probleme betreffend die Haftung der Schichten aneinander werden nicht angesprochen.

Aufgabe der Erfindung ist es, ein Verfahren zur Beschichtung von Kunststoffsubstraten bereitzustellen, bei dem die angesprochenen Probleme nicht mehr auftreten.

Gelöst wird die Aufgabe mit einem Verfahren, das die Merkmale des Anspruches 1 aufweist.

Erfindungsgemäß ist vorgesehen, dass das polymere Kunststoffsubstrat in mindestens seinem pigmentierten Bereich mit einem pigmentarmen oder pigmentfreien polymeren Sperrgrund beschichtet wird.

Der Begriff pigmentierter Bereich umfasst, dass das polymere Kunststoffsubstrat einen Bereich aufweist, in dem eine pigmenthaltige Schicht aufgebracht ist.

Auf den Sperrgrund und gegebenenfalls verbleibende, nicht pigmentierte Bereiche des Kunststoffsubstrats, wird dann der gewünschte Funktionsüberzug aufgebracht.

Erfindungsgemäß ist der Sperrgrund so beschaffen, dass er eine Art Haftvermittler zwischen der pigmenthaltigen Schicht und dem Funktionsüberzug herstellt. Mit anderen Worten, der Sperrgrund haftet einerseits auf der pigmentierten Schicht und bildet andererseits eine Oberfläche aus, an der der Funktionsüberzug haften kann.

Da der Funktionsüberzug so gewählt wird, dass mit ihm das Kunststoffsubstrat beschichtet werden kann, lassen sich die oben erwähnten Eigenschaften des Sperrgrunds z.B. mit einer Zubereitung erzielen, die einen überwiegenden Anteil an Polymer mit ähnlichen Eigenschaften insbesondere ähnlichen Hafteigenschaften wie das Substratpolymer aufweist.

Selbstverständlich kann die Beschichtung aber auch andere Polymere als das Substrat und der Sperrgrund enthalten. Bevorzugt wird aber auch für diese pigmentierte Beschichtung ein ähnliches oder gleiches Polymer gewählt.

Die Erfindung ist auf sämtliche Kunststoffsubstrate bzw. Beschichtungen gerichtet, die ihrerseits mit einem Funktionsüberzug versehen werden sollen und deren Oberfläche eine pigmentierte Polymerschicht enthält.

Unter dem Begriff Kunststoffsubstrat sind übliche polymere Werkstoffe gemeint. Typische Substratpolymere sind z.B. Polycarbonat, Polyacrylat, Polyester, Polyamid oder Polyurethan.

Unter dem Begriff Pigment werden alle anorganischen Füllstoffe verstanden, wie sie üblicherweise z.B. in Lacken eingesetzt werden. In dieser allgemeinen Definition umfasst der Begriff Pigment sowohl farbige, als auch anorganische Füllstoffe, die z.B. zur Erhöhung der mechanischen Festigkeit, zum UV-Schutz oder als Flammschutzmittel dienen. Die Pigmente sind in der Regel im Kunststoffsubstrat oder einer darauf befindlichen Schicht dispers verteilt. Zur Homogenisierung, bzw. zur Verhinderung von Agglomerationen können Additive wie z. B. Wachs oder Komplexbildner zugesetzt sein.

Der Begriff Überzug bzw. Schicht meint in der Regel eine Art Lack auf Polymerbasis, also im Wesentlichen eine flüssige oder pulverförmig feste Substanz, die in dünner Schicht auf das Kunststoffsubstrat appliziert wird und gegebenenfalls nach Auftrag durch chemische Reaktion bzw. physikalische Veränderung aushärten.

Der Begriff pigmentarmer oder pigmentfreier polymerer Sperrgrund bezeichnet insbesondere einen Überzug, der frei von Pigmenten ist oder nur geringe Mengen an Pigmenten enthält. Unterschreitet der Pigmentanteil einen Wert von etwa 25%, bestimmt gemäss DIN 55678, kann die nachfolgende Beschichtung die Restpigmente eventuell tolerieren.

Denkbar und mit der Erfindung abgedeckt ist damit auch, dass der Sperrgrund noch einen relativ geringen Pigmentanteil aufweist.

Der Sperrgrund wird in aller Regel in einer Dicke bis 250 *µ*m aufgetragen. Er wird flüssig bis pastös aufgetragen und härtet dann durch Trocknung oder chemische Vernetzung aus.

Erfindungsgemäß kann vorgesehen sein, dass der Sperrgrund einen überwiegenden Anteil an Polymer mit ähnlichen Eigenschaften, insbesondere ähnlichen Hafteigenschaften, wie das Substratpolymer enthält.

Bevorzugt entspricht ein überwiegender Anteil des Sperrgrundpolymer dem Substratpolymer. In der Regel handelt es sich bei diesen übereinstimmenden Polymeren um Polycarbonate, Polyacrylate, Polyester, Polyamide oder Polyurethane, oder auch Gemische davon. Überwiegender Anteil bedeutet, dass mehr als 50 % des Polymeranteils im Sperrgrund den Polymeren im Kunststoffsubstrat entspricht. Es kann dabei allerdings vorgesehen sein, dass die Polymere im Sperrgrund ein etwas geringeres Molekulargewicht als die Polymere im Kunststoffsubstrat aufweisen, da sich insbesondere bei Reaktivlacken bei der Aushärtung das mittlere Molekulargewicht erhöht, so dass sich nach Aushärtung etwa wieder ein dem Kunststoffsubstrat entsprechendes Molekulargewicht in dem Sperrgrund einstellen kann.

Die Übereinstimmung der Polymere in dem Sperrgrund und in dem Kunststoffsubstrat ist insbesondere im Hinblick auf die nachfolgende Beschichtung mit dem Funktionsüberzug von Vorteil. In aller Regel ist nur bereichsweise eine pigmentierte Schicht auf das Kunststoffsubstrat aufgebracht. Aus Kostengründen wird dann vorzugsweise auch nur bereichsweise, nämlich in dem pigmentierten Bereich, ein Sperrgrund aufgetragen und der Rest des Kunststoffsubstrates bleibt frei. Dadurch, dass Sperrgrund und Kunststoffsubstrat ähnliche Polymereigenschaften haben, bietet sich für die nachfolgende Beschichtung mit dem Funktionsüberzug eine weitgehend einheitliche Oberfläche mit ähnlichen Haftungseigenschaften etc.

Der angesprochene Funktionsüberzug ist in aller Regel ebenfalls ein Lack. Es kann sich dabei z. B. um einen Polysiloxan handeln, mit dem ein abriebfester Überzug erzeugt wird.

Der Auftrag der pigmenthaltigen Schicht, des Sperrgrundes und des Funktionsüberzuges kann auf übliche Weise erfolgen. In der Regel besteht die zur Auftragung hergestellte Zubereitung aus einer Lösung, in der die Polymere vorzugsweise gelöst sind. Denkbar ist auch ein Gel oder eine Emulsion. Die Konsistenz der Zubereitung, z. B. Festkörpergehalt, Viskosität oder Dichte und die Zusammensetzung der flüchtigen Bestandteile, d. h. der Lösemittel, richtet sich nach der Art des Auftrages. Vorzugsweise wird die Zubereitung durch Spritzen, Drucken, Fluten oder Tauchen auf die zu beschichtenden Flächen aufgebracht. Viskosere Formen wie Gel und Paste sind insbesondere für einen Auftrag mittels Drucken geeignet. Als Druckverfahren eignen sich z. B. das indirekte Hochdruckverfahren, aber auch Siebdruck oder Flexodruck, bzw. kontaktfreie Druckverfahren, wie z. B. Digitaldruck, Laserdruck oder Tintenstrahldruck.

Fluten oder Tauchen eignet sich, wenn das Substrat vollflächig beschichtet, bzw. mit Sperrgrund oder Funktionsüberzug versehen werden soll.

Denkbar ist selbstverständlich auch, dass die einzelnen Schichten des Verfahrens auf unterschiedliche Weise aufgebracht werden. So ist es z. B. möglich, dass das Kunststoffsubstrat zunächst mittels Siebdruck mit einer pigmentierten Beschichtung versehen wird. Der nachfolgend applizierte Sperrgrund kann dann z. B. mittels eines anderen Druckverfahrens oder aber auch durch Spritzlackieren erfolgen. Es handelt sich dabei nur um ein Beispiel. Selbstverständlich können auch andere Auftragungsformen in anderen Kombinationen gewählt werden.

Von dem vorher Gesagten wird deutlich, dass die Erfindung eine Reihe von unterschiedlichen Ausgestaltungen abdeckt. Wesentliches Merkmal ist, dass ein pigmenthaltiger Bereich des Kunststoffsubstrates vor Beschichtung mit einem Funktionsüberzug zunächst mit einem Sperrgrund versehen wird, der optimale Eigenschaften für die nachfolgende Beschichtung herstellt. Eine vorherige Grundierung oder Beschichtung mit einem Primer ist in dem erfindungsgemäßen Verfahren nicht mehr erforderlich.

In Tabelle 1 sind Kombinationen von Substratpolymer, Pigmenten und Sperrgrund zusammengefasst, die in Serienproduktionen eingesetzt werden können.

**Tab.1**

| **Substratpolymer** | **typische Pigmente im Substrat** | **Sperrgrundpolymer** | **Lösungsmittel des Sperrgrunds** | **Auftragstechnik** | **Funktionsüberzug** |
|---|---|---|---|---|---|
| Polybisphenolcarbonat | Eisenoxide, Ruß | Polycarbonat | Methoxypropanol, Propylencarbonat, Naphtha | Siebdruck | Polysiloxan |
| Polybisphenolcarbonat | Eisenoxide, Ruß | Polycarbonat | Naphtha, Petrolether, , | Spritzen | Polysiloxan |
| Polybisphenolcarbonat | Chinacridon, Titandioxid, Zinkoxid, Zinkferrit, Sodalith, Kupfer-phthalocyanin | Polycarbonat | Propylenglycolmonomethyletheracetat, Propylencarbonat, Naphtha, Mesitylen, Cumol, Xylol | Siebdruck | Polysiloxan |
| Polybisphenolcarbonat | Rhodamin, Kobaltaluminat, Manganammoniumphosphat, Pyrazolochinazolon, Nickelantimonanastas, Chromoxid | Polycarbonat und Polyurethan | Methoxypropanol, Propylencarbonat, Naphtha | Siebdruck | Polysiloxan |
| Polymethylmethacrylat | Tonerde, Bleichromat, Alizarin | Polyacrylat | Aceton, Diacetonalkohol Acetessigsäureethylester, Ethylester | Siebdruck | Polysiloxan |

In aller Regel handelt es sich bei dem Substratpolymer um ein Polycarbonat, z.B. ein Polybisphenolcarbonat. Denkbar ist auch ein Polymethylmetacrylat. Typische, bei den Beispielen in der Tabelle bereits ins Substratpolymer eingearbeitete Pigmente sind in der zweiten Spalte der Tabelle angegeben.

Als Sperrschicht werden, wie in der dritten Spalte angegeben, Zubereitungen mit Polycarbonat bzw. Polyacrylat eingesetzt. Geeignete Lösungsmittel für die Sperrschicht sind in der vierten Spalte angegeben. Der Auftrag der Sperrschicht erfolgt hier mittels Siebdruck oder Spritzen. Bei der Funktionsbeschichtung handelt es sich in aller Regel um eine Polysiloxan-Beschichtung.

Die Erfindung ist selbstverständlich nicht auf diese Kombinationen beschränkt. Die Tabelle soll vielmehr exemplarisch eine Möglichkeiten aufzeigen.

Wie eingangs bereits angesprochen, richtet sich die Erfindung nicht nur auf ein Verfahren zur Beschichtung von Kunststoffsubstraten. Die Erfindung ist weiterhin auch auf ein Verfahren zur Herstellung eines geformten Kunststoffproduktes gerichtet, bei dem eine erfindungsgemäße Beschichtung vorgenommen wurde. Schließlich richtet sich die Erfindung auch auf nach dem Verfahren hergestellte Kunststoffsubstrate.

Das erfindungsgemäße Herstellungsverfahren sieht vor, dass ein Kunststoffsubstrat zunächst wie oben beschrieben beschichtet wird und dann mittels Thermoverformung in eine gewünschte Form gebracht wird. Es sind verschiedene dem dem Fachmann bekannte thermische Formprozesse anwendbar.

Erfindungsgemäß auf diese Weise hergestellte Kunststoffprodukte sind insbesondere die oben angesprochenen Kfz-Scheiben, die z. B. in Sicherheitsfahrzeugen zum Einsatz kommen können. Selbstverständlich sind mit der Erfindung aber auch alle weiteren geformten Kunststoffprodukte abgedeckt, bei denen eine Pigmentierung und ein nachfolgender Funktionsüberzug erforderlich ist, wie z.B. antistatische Maschinenabdeckungen, eingefärbte Fahrzeugverkleidungen, flammgeschützte Lärmschutzwände und witterungsbeständige Leuchtenabdeckungen.

Im folgenden soll die Erfindung anhand einer Abbildungen und eines Beispiels näher erläutert werden.

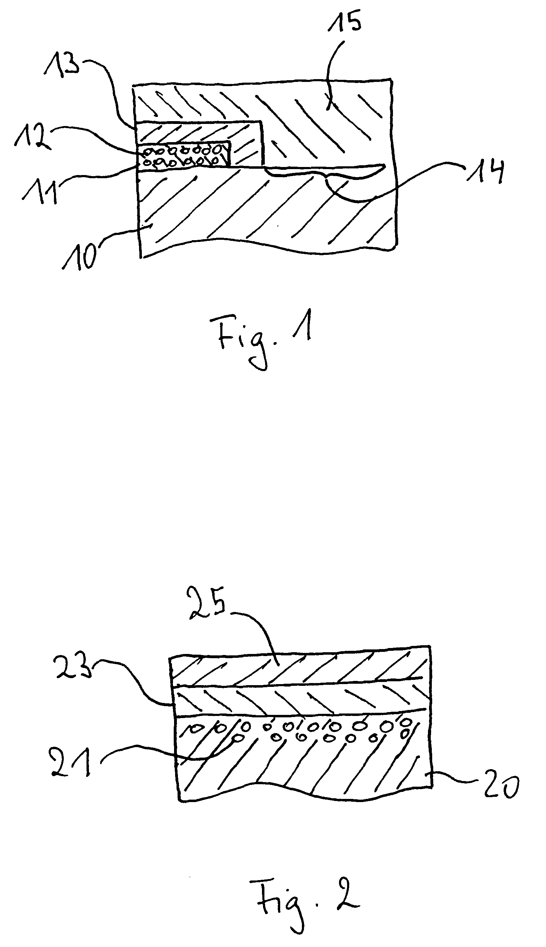

- Fig. 1: zeigt im Schnitt den prinzipiellen Aufbau einer erfindungsgemäßen Beschichtung bei einem Substrat, das teilweise mit einer Pigmentschicht versehen ist.

In Fig. 1 ist als unterste Schicht ein Kunststoffsubstrat 10 dargestellt. Auf die Oberfläche des Substrates 10 ist bereichsweise eine Schicht 11 aufgebracht, die Pigmente 12 enthält. Die Schicht 11 ihrerseits ist mit einem Sperrgrund 13 abgedeckt. Auf den Sperrgrund 13 und einen freien Bereich 14 des Kunststoffsubstrates 10 ist schließlich ein Funktionsüberzug 15 aufgebracht.

### Beispiel:

### Herstellung einer Polycarbonat-Kfz-Scheibe

Ein planer Zuschnitt aus transparentem, 8 mm-starken Polycarbonat wird im Siebdruckverfahren mit einem schwarzen Rand bedruckt. Das Motiv ist etwas größer als die Außenmaße des späteren Endproduktes, das die Scheibe aus dem beschichteten Zuschnitt herausgefräst wird.

Für den Druck des Schwarzrands wird eine unter der Bezeichnung "Noriphan HTR 952" bei der Firma Pröll erhältliche schwarze Farbe verwendet, unter Zusatz von 15% Verzögerer und 5% Verdünner. Die Farbe enthält Ruß und Eisenoxid als Pigmente.

Nach Trocknung erfolgt der Auftrag des Sperrgrunds, ebenfalls im Siebdruck. Die Zubereitung besteht aus Bisphenol-A-polycarbonat, das in einem Lösemittelgemisch gelöst wird. Das Gemisch besteht aus 25% Naphta, 35% Propylenglycolmonomethyletheracetat, 10% Methoxapropanol, 10% Dimedon, 10% Xylol (Isomerengemisch), 5% Trimethylbenzol (Isomerengemisch) und 5% Propylenglycolcarbonat. Verwendet wird ein Sieb mit 90 Fäden/cm.

Der Druck wird zunächst im Durchlaufofen bei 80°C heißluft getrocknet, dann nochmals für 30-60 min bei 60-80°C im Heißluftofen unter Abluftabfuhr.

Die bedruckte Platte wird anschließend thermisch geformt. Hierzu wird die Platte in eine Form gelegt und im Umluftofen bei 135-145°C gelagert. Als Form dient ein hitzebeständiger Rahmen. Hat die Platte die entsprechende Temperatur erreicht, bei der sie elastisch genug ist, wird ein zweiter Rahmen von oben auf die Form gelegt und mittels Riegeln und Arretierhilfen fest eingespannt. Die Rahmen berühren die Teile der Platte, die nicht zum Endprodukt gehören. Die Form samt Platte wird für 60-70 min im Ofen gehalten. Nach dieser Zeit lässt man die Form im abgeschalteten Ofen bei geöffneter Tür auskühlen.

Das Formteil wird nach Erkalten aufgehangen und mit einem abriebfesten Polysiloxanlack, KASI PC Flex (KRD), beschichtet. Dabei wird zunächst eine übliche Grundierung, in diesem Fall eine Polyacrylat, KASI Primer (Firma KRD) durch Fluten beider Seiten gleichzeitig aufgetragen. Das Fluten erfolgt von der Oberkante. Die herablaufende Grundierung wird in einem Becken aufgefangen. Nach 10-20 min Antrocknen wird der Polysiloxanlack auf gleiche Weise aufgetragen. Nach der Antrocknungszeit wird das Formteil im Ofen bei 120-125°C getrocknet. Anschließend wird die Scheibe herausgefräst und zum Transportschutz poliert.

## Patentansprüche

1. Verfahren zur Beschichtung von polymeren Kunststoffsubstraten, auf die mindestens bereichsweise eine polymere pigmenthaltige Schicht aufgebracht ist, in mindestens dem pigmentierten Bereich mit einem pigmentarmen, polymeren Sperrgrund, dessen Pigmentanteil kleiner 25 Gew.-% ist und mit einem auf den Sperrgrund aufgebrachten Funktionsüberzug, wobei der Sperrgrund so beschaffen ist, dass er einerseits auf dem pigmentierten Bereich haftet und andererseits der Funktionsüberzug auf ihm haftet.

2. Verfahren nach Anspruch 1, **dadurch gekennzeichnet, dass** der Sperrgrund ähnliche Hafteigenschaften für den Funktionsüberzug besitzt wie das Substratpolymer.

3. Verfahren nach Anspruch 1, **dadurch gekennzeichnet, dass** der Sperrgrund einen mit dem Substratpolymer und/oder der pigmentierten Schicht übereinstimmenden Polymeranteil von jeweils mehr als 50% aufweist.

4. Verfahren nach Anspruch 1, **dadurch gekennzeichnet, dass** es sich bei dem polymeren Kunststoffsubstrat um einen üblichen polymeren Werkstoff handelt, dessen Polymeranteil Polycarbonate, Polyacrylate, Polyester, Polyamide oder Polyurethane oder Gemische der genannten Polymere aufweist.

5. Verfahren nach Anspruch 4, **dadurch gekennzeichnet, dass** es sich bei dem polymeren Kunststoffsubstrat um zur Herstellung von Kfz-Scheiben geeignete Werkstoff, insbesondere auf Basis von Polycarbonat handelt.

6. Verfahren nach Anspruch 1, **dadurch gekennzeichnet, dass** es sich bei der pigmenthaltigen Schicht um einen Lacküberzug handelt.

7. Verfahren nach Anspruch 1, **dadurch gekennzeichnet, dass** die im pigmentierten Bereich des Kunststoffsubstrats enthaltenen Pigmente gefärbte anorganische Füllstoffe sind.

8. Verfahren nach Anspruch 1, **dadurch gekennzeichnet, dass** es sich bei der pigmenthaltigen Schicht um eine Pigmente enthaltene Zubereitung auf Basis von Polycarbonat, Polyacrylat, Polyester, Polyamid oder Polyurethan oder Gemische davon handelt.

9. Verfahren nach Anspruch 1, **dadurch gekennzeichnet, dass** die pigmenthaltige Schicht einen überwiegenden Anteil an Polymer mit ähnlichen Eigenschaften wie das Substratpolymer aufweist.

10. Verfahren nach Anspruch 1, **dadurch gekennzeichnet, dass** der Sperrgrund eine Schichtdicke von höchstens 250 *µ*m aufweist.

11. Verfahren nach Anspruch 1, **dadurch gekennzeichnet, dass** der Sperrgrund einen Pigmentanteil von höchstens 10% bezogen auf die Ausgangszubereitung aufweist.

12. Verfahren nach Anspruch 1, **dadurch gekennzeichnet, dass** der aufgetragene Sperrgrund thermisch formbar ist.

13. Verfahren zur Herstellung eines geformten Kunststoffproduktes, bei dem ein Kunststoffsubstrat wie in Anspruch 1 beschichtet wird und zusätzlich vor oder nach Aufbringen des Funktionsüberzuges mittels thermischer Verformung in eine gewünschte Form gebracht wird.

14. Kunststoffprodukte hergestellt mit einem Verfahren gemäss Anspruch 13.

15. Kunststoffprodukt nach Anspruch 14, **dadurch gekennzeichnet, dass** es sich um eine geformte Kfz-Scheibe handelt.

## Claims

1. Method for the coating of polymeric plastic substrates, which have a polymeric pigment-containing layer applied to them, at least over regions thereof, at least in the pigmented region with a low-pigment polymeric barrier primer whose pigment fraction is less than 25% by weight, and with a functional coating that is applied to the barrier primer, whereby the barrier primer is operable such that, on the one hand, it adheres on the pigmented region and, on the other hand, the functional coating adheres on it.
Patent claims

2. Method according to claim 1, **characterised in that** the barrier primer possesses similar adhesive properties with respect to the functional coating as the substrate polymer.

3. Method according to claim 1, **characterised in that** the barrier primer comprises a polymer fraction that is consistent with the substrate polymer and/or the pigmented layer, each being more than 50%.

4. Method according to claim 1, **characterised in that** the polymeric plastic substrate is a common polymeric material whose polymer fraction comprises polycarbonates, polyacrylates, polyesters, polyamides or polyurethanes or mixtures of said polymers.

5. Method according to claim 4, **characterised in that** the polymeric plastic substrate is a material that is suitable for the production of passenger car windows, in particular on the basis of polycarbonate.

6. Method according to claim 1, **characterised in that** the pigment-containing layer is a lacquer coating.

7. Method according to claim 1, **characterised in that** the pigments contained in the pigmented region of the plastic substrate are coloured inorganic filling agents.

8. Method according to claim 1, **characterised in that** the pigment-containing layer is a pigment-containing preparation based on polycarbonate, polyacrylate, polyester, polyamide or polyurethane or mixtures thereof.

9. Method according to claim 1, **characterised in that** the pigment-containing layer has a predominant fraction of polymer having properties that are similar to those of the substrate polymer.

10. Method according to claim 1, **characterised in that** the barrier primer has a layer thickness of at most 250 µm.

11. Method according to claim 1, **characterised in that** the barrier primer has a pigment fraction of at most 10% relative to the starting preparation.

12. Method according to claim 1, **characterised in that** the applied barrier primer can be subjected to thermal forming.

13. Method for the production of a formed plastic product, in which a plastic substrate is being coated in accordance with claim 1 and, in addition, is made to assume a desired shape by thermal deformation before or after application of the functional coating.

14. Plastic products produced using a method according to claim 13.

15. Plastic product according to claim 14, **characterised in that** it is a formed passenger car window.

## Revendications

1. Procédé de revêtement de substrats en plastique polymère dotés d'une couche polymère contenant des pigments appliquée sur certaines zones au moins, le revêtement étant l'application, au moins sur la zone pigmentée, d'une couche de barrage polymère à faible teneur en pigments, cette teneur en pigments étant inférieure à 25 % en poids, et d'une couche fonctionnelle appliquée sur la couche de barrage, la constitution de la couche de barrage étant telle que celle-ci adhère d'une part à la zone pigmentée et que, d'autre part, la couche fonctionnelle adhère sur elle.

2. Procédé selon la revendication 1, **caractérisé en ce que** la couche de barrage possède, pour la couche fonctionnelle, des propriétés adhésives similaire à celles du substrat.

3. Procédé selon la revendication 1, **caractérisé en ce que** la couche de barrage présente une teneur en polymère correspondant à celle du polymère du substrat et/ou de la couche pigmentée de respectivement plus de 50 %.

4. Procédé selon la revendication 1, **caractérisé en ce que** le substrat en plastique polymère est un matériau polymère usuel dont la composition polymères présente des polycarbonates, des polyacrylates, des polyesters, des polyamides ou des polyuréthanes ou des mélanges des polymères cités.

5. Procédé selon la revendication 4, **caractérisé en ce que** le substrat en plastique polymère est un matériau approprié à la fabrication de vitres pour véhicules, notamment un matériau à base de polycarbonate.

6. Procédé selon la revendication 1, **caractérisé en ce que** la couche contenant des pigments est une couche de vernis.

7. Procédé selon la revendication 1, **caractérisé en ce que** les pigments contenus dans la zone pigmentée du substrat en plastique sont des matières de charge anorganiques colorées.

8. Procédé selon la revendication 1, **caractérisé en ce que** la couche contenant des pigments est une préparation pigmentée à base de polycarbonate, de polyacrylate, de polyester, de polyamide ou de polyuréthane ou d'un mélange de ces matières.

9. Procédé selon la revendication 1, **caractérisé en ce que** la couche contenant des pigments est en majeure partie composée d'un polymère dont les propriétés sont similaires à celles du polymère du substrat.

10. Procédé selon la revendication 1, **caractérisé en ce que** la couche de barrage a une épaisseur maximale de 250 µm.

11. Procédé selon la revendication 1, **caractérisé en ce que** la couche de barrage a une teneur en pigments maximale de 10 % dans la préparation de base.

12. Procédé selon la revendication 1, **caractérisé en ce que** la couche de barrage appliquée est thermoformable.

13. Procédé de fabrication d'un produit en matière plastique formé, dans le cadre duquel un revêtement est appliqué sur un substrat en plastique conformément à la revendication 1, la forme souhaitée du produit étant en outre obtenue par déformation thermique avant ou après l'application de la couche fonctionnelle.

14. Produits en matière plastique fabriqués par un procédé selon la revendication 13.

15. Produit en matière plastique selon la revendication 14, **caractérisée en ce que** le produit est une vitre de véhicule formée.
